# EUROPÄISCHE PATENTSCHRIFT

(11) **EP 3 981 245 B1**
(45) Veröffentlichungstag und Bekanntmachung des Hinweises auf die Patenterteilung: **07.06.2023**
(21) Anmeldenummer: 21198191.5
(22) Anmeldetag: 22.09.2021
(51) Int. Cl.: A01F 15/08

(54) **LANDWIRTSCHAFTLICHE HALMGUTPRESSE UND VERFAHREN ZUR ABLAGE VON BALLEN AUS GEPRESSTEM HALMGUT**
AGRICULTURAL STALK PRESS AND METHOD FOR DEPOSITING BALES MADE OF PRESSED STALK MATERIAL
PRESSE AGRICOLE POUR FOURRAGE ET PROCÉDÉ DE DÉPÔT DES BALLES DE FOURRAGE COMPRIMÉ

(30) Priorität: 09.10.2020 DE 102020126480
(43) Veröffentlichungstag der Anmeldung: 13.04.2022
(73) Patentinhaber: Rubenbauer, Georg, 95695 Mähring (DE)
(72) Erfinder: Rubenbauer, Georg, 95695 Mähring (DE)
(74) Vertreter: Benninger, Johannes

(56) Entgegenhaltungen:
- EP-B1- 2 289 305
- US-A- 4 162 135
- US-A- 5 560 191
- US-A- 6 033 172

## Beschreibung

Die vorliegende Erfindung betrifft eine landwirtschaftliche Halmgutpresse mit den Merkmalen des unabhängigen Anspruchs 1 zum Pressen von insbesondere quaderförmigen Ballen oder Großballen. Die Erfindung betrifft zudem ein Verfahren zur Ablage von insbesondere quaderförmigen Ballen oder Großballen mit den Merkmalen des unabhängigen Verfahrensanspruchs 10.

In der landwirtschaftlichen Pflanzen- und Tierfutterproduktion fällt bei vielen Erntevorgängen verwertbares Halmgut an, so etwa Getreidestroh, Maisstroh oder Heu. Solches Halmgut bildet in den seltensten Fällen einen Abfallstoff, auch wenn es sich in manchen Verfahrensvarianten als sinnvoll erwiesen hat, das Getreidestroh als organisches Mulchmaterial auf dem Feld zu belassen. Dies betrifft etwa den Bereich der nicht wendenden oder sog. pfluglosen Bodenbearbeitung. Darüber hinaus kann Getreidestroh als vergärbare Beladung von Biogasanlagen und damit zur Energiegewinnung eingesetzt werden.

Normalerweise jedoch stellt das abgeerntete Halmgut einen wichtigen Rohstoff dar, der in vielen landwirtschaftlichen Prozessketten benötigt wird. So kann Getreidestroh, das im Zusammenhang mit dem Mähdrusch in vergleichsweise großen Mengen abfällt, als Einstreu für Stalltiere benötigt werden, während Heu ein wertvolles Tierfutter für Weidetiere bilden kann, die als landwirtschaftliches Großvieh oftmals nicht auf die Weide gelangen, sondern im Stall gefüttert werden.

Während in herkömmlichen Prozessen der Heugewinnung das frisch gemähte Gras auf dem Feld getrocknet und anschließend mittels Ladewagen oder auf andere Weise geborgen wird, hat sich gezeigt, dass auf diese Weise sehr große Transport- und Lagervolumina benötigt werden, die durch Pressen des Heus deutlich reduziert werden können. Durch einen solchen Pressvorgang, der sinnvollerweise bereits auf dem Feld stattfindet, wird aus dem luft- und sonnengetrockneten Heu (oder auch aus Stroh) ein Stückgut gemacht, das durch einen solchen Verarbeitungs- und Umformungsvorgang viel leichter maschinell handhabbar und stapelbar wird und in fördertechnischer Hinsicht besser verarbeitet und gehandhabt werden kann.

Für die Handhabung der solchermaßen aus geerntetem Halmgut gebildeten Pressportionen oder Stückgüter werden im einfachsten Fall landwirtschaftliche Zugmaschinen mit frontseitig angebauten hydraulischen Hebevorrichtungen eingesetzt. Daneben haben sich sog. Hoflader bewährt und vielerorts durchgesetzt, die dann zum Einsatz kommen, wenn eine ausreichende Auslastung eines solchen Fahrzeuges auf dem Feld und am Hof gegeben ist, d.h. wenn zahlreiche Einsatzmöglichkeiten zum Heben, Umsetzen, Stapeln und allgemein zum Handhaben von Heu- oder Strohballen vorhanden sind.

In der Frühphase der Entwicklung wurden zum Pressen von Halmgut stationäre Pressvorrichtungen eingesetzt, was jedoch nicht den Nachteil beheben konnte, dass weiterhin große Volumina an geerntetem Halmgut vom Feld zur Pressvorrichtung zu befördern waren. Aus diesem Grund wurden mobile Pressen entwickelt, die zunächst als angehängte und zapfwellenbetriebene Maschinen von landwirtschaftlichen Zugmaschinen auf das Feld gezogen wurden, um dort das getrocknete und normalerweise in Schwaden abgelegte Halmgut aufzunehmen und zu gepressten Einheiten zu verarbeiten. Diese Maschinentypen sind etwa als Niederdruck- oder als Mitteldruck-Aufsammelpressen bekannt und gebräuchlich geworden.

Nachdem sich zur Mitte des vergangenen Jahrhunderts allmählich der Mähdrusch mit dem einphasigen Schneiden und Ausdreschen von Getreidefrüchten durchsetzen konnte, fiel bei diesen Verarbeitungsvorgängen immer mehr Stroh an, das mittels verfügbarer Pressvorrichtungen verarbeitet werden konnte, was in der Folge zur Weiterentwicklung der bereits bekannten Niederdruck- und Mitteldruckpressen zu den sog. Hochdruck-Aufsammelpressen führte, die das Getreidestroh sehr stark verdichten und auf diese Weise hochverdichtete, aber dafür auch relativ schwere Strohballen bilden konnten.

Im Wesentlichen sind in heutiger Zeit zwei Varianten von gezogenen und zapfwellenbetriebenen Hochdrucksammelpressen gebräuchlich, die nach der Form der damit gebildeten Ballen unterschieden werden. Beide Varianten erlauben eine hocheffektive und sehr schnelle Arbeitserledigung auch bei großen zu befahrenden Flächen und den damit einhergehenden großen Volumina an getrocknetem und zu pressendem Halmgut.

Eine erste gebräuchliche Variante zur Formung zylindrischer Ballen nimmt das in Schwaden auf dem Feld liegende Halmgut auf und sorgt dafür, dass es in der Maschine um eine Längsmittelachse gewickelt sowie vor dem heckseitigen Auswerfen aus der Maschine mittels Sisalgarn oder einem anderen geeigneten Bindegarn zusammengebunden wird. Die solchermaßen geformten und gepressten Rundballen werden abschließend auf dem Feld abgelegt, indem jeder gepresste Ballen durch eine rückseitige Öffnung der Rundballenpresse ausgeworfen oder herausgerollt wird, um ohne weitere Behandlung oder Bearbeitung auf seiner zylindrischen Mantelfläche zum Liegen zu kommen. Die solchermaßen auf dem Feld abgelegten Ballen können anschließend in einem nachfolgenden Arbeitsgang mittels beweglicher Gabelzinken, die an einer hydraulischen Hebevorrichtung einer landwirtschaftlichen Zugmaschine oder eines Hofladers angeordnet sind, aufgenommen und direkt zum nahegelegenen Hof oder für einen längeren Transportweg zu einem Sammeltransporter wie einem offenen Anhänger gebracht und dort aufgeladen werden.

Eine gleichfalls sehr verbreitete zweite Variante, die als Packenpresse oder Großpackenpresse bezeichnet wird, formt quaderförmige Ballen, die in einem kontinuierlichen Herstell-, Umform- und Förderprozess aus dem aufgenommenen Heu oder Stroh geformt und nach dem Binden über eine heckseitig an der angehängten und mittels der landwirtschaftlichen Zugmaschine gezogenen und mittels deren Zapfwelle angetriebenen Packenpresse angebrachten sog. Schurre ausgegeben und auf dem Feld abgelegt werden. Die weitere Handhabung, d.h. das Aufnehmen, Laden, Stapeln etc. z.B. auf einem Anhänger, kann im Wesentlichen dieselbe sein wie bei den Rundballen, wobei jedoch zu bemerken ist, dass sich quaderförmige Ballen leichter und platzsparender Stapeln und in größeren Mengen bevorraten lassen als die beim Stapeln mehr Raum benötigenden Rundballen.

Ein typischer Materialfluss, den das aufgenommene Halmgut durch eine Rundballen-, durch eine Packenpresse oder durch eine sog. Großpackenpresse nimmt, findet sich bspw. in der EP 2 289 305 B1 beschrieben. So weisen derartige Packen- oder Ballenpressen eine rotierende Aufnahmeeinheit, ein sog. Pick-Up auf, mit dem das auf dem Feld liegende Halmgut aufgenommen und in die Maschine überführt wird. Das aufgenommene Erntegut kann anschließend mit Hilfe von Schneckenförderern von den Seiten in Richtung zur Mitte zusammengeführt werden, da nachgeordnete Schneidwerke und Presskanäle in aller Regel deutlich schmaler ausgeführt sind als der Aufnahme-Pick-Up sowie die Gesamtbreite der Presse. Während etwa eine Gesamtbreite einer solchen gezogenen Presse bei etwas mehr als zwei Metern liegen kann, beträgt das Breitenmaß der damit geformten Packen oder Ballen normalerweise nur wenig mehr als einen Meter.

Großballenpressen verfügen nicht zwingend über ein Schneidwerk, während die hier definierte und nachfolgend anhand ihrer wesentlichen Merkmale näher beschriebene Packenpresse oder Großpackenpresse definitionsgemäß ein Schneidwerk mit einer Vielzahl an parallel geführten Schneidmessern aufweist, mit denen das aufgenommene Halmgut in kleinere Abschnitte zerteilt werden kann, sofern dies im Zusammenhang mit dem Pressvorgang und dem Prozess der Packenbildung gewünscht ist. Sofern ein solches Schneidwerk vorhanden ist, befindet sich dieses typischerweise in Förderrichtung unmittelbar hinter der Schneckenzusammenführung. Meist verfügen Großballen- oder Großpackenpressen über eine Vorpresseinrichtung, die in der Lage ist, die anfallende Masse des Erntegutes in kleineren Teilpaketen vorzuverdichten und die Teilpakete anschließend in die Hauptpresskammer zu überführen. Auf diese Weise kann gewährleistet werden, dass die Hauptpresskammer nicht unmittelbar einen unverdichteten Gutstrom verarbeiten und pressen muss, was bei den üblichen Leistungsbereichen der Großballenpressen oder Großpackenpressen nicht sinnvoll wäre.

Über einen Presskolben, der bei einer solchen Großballen- oder Großpackenpresse oszillierend arbeitet, wird das Halmgut hoch verdichtet und dann der geformte Ballen oder Packen mit Garn umwickelt und das Garn verknotet. Das Erntegut wird in der Presskammer durch den Kolben verdichtet, bis ein entsprechender Ballen- oder Packengegendruck im Presskanal durch die Auswurfeinrichtung aufgebaut ist. Danach wird die Garnzuführung sowie die Bindeeinrichtung mit dem Knoter ausgelöst und der Ballen oder Packen gebunden. Anschließend wird der gebundene Ballen oder Packen zur Auswurfeinrichtung, der sog. Schurre weitergeführt und schließlich durch den Staudruck und die ununterbrochene Zuführung weiterer Ballen oder Packen heckseitig ausgeworfen.

Die Zuführung der vorverdichteten Teilpakete an Halmgut ist diskontinuierlich und hängt zwangsläufig ab von der jeweiligen Stellung des Presskolbens. Wenn der Kolben zurückgezogen ist, kann die Presskammer befüllt werden, da hierbei die Öffnung der Zuführung zugänglich ist. Zur abschließenden Verdichtung erfolgt ein Vorschub des Kolbens der Hauptpresskammer, wodurch der quaderförmige Großpacken geformt wird, um anschließend mit Garn umwickelt zu werden, wonach das Garn verknotet wird.

Weitere Aspekte des Materialflusses lassen sich der genannten Patentschrift EP 2 289 305 B1 oder auch anderen Patentdokumenten entnehmen. Neben den beschriebenen Details des Materialflusses befasst sich das genannte Patentdokument mit Aspekten der Reinigung, insbesondere der Bindeeinrichtung.

Während auf dem Feld abgelegte Rundballen, die von einer Rundballenpresse erzeugt wurden, in oben beschriebener Weise problemlos mittels Zinkenhebern aufgenommen und bewegt oder verladen werden können, kann bei quaderförmigen Großpacken, die vom Ablageort auf dem Feld aufgenommen und verladen werden sollen, ein zusätzlicher Handhabungsschritt notwendig sein. Da die Großpackenpressen, die quaderförmige Großpacken erzeugen, eine maximale Baubreite aufweisen, um noch problemlos auf öffentlichen Straßen bewegt werden zu dürfen, werden die mit diesen Maschinen erzeugten Großpacken über eine heckseitig angeordnete Rollenschurre in einer längsseitigen Ausrichtung ausgegeben, bei der die Schmalseiten der Großpacken quer zur Fahrtrichtung zum Liegen kommen, so dass die hintereinander ausgegebenen Großpacken jeweils in definierten Abständen mit zueinander weisenden Schmalseiten sowie mit fluchtenden Längsseiten auf dem Feld liegen.

Das Verladen dieser quaderförmigen Ballen in der auf dem Feld liegenden Anordnung kann nur durch seitliches Untergreifen oder Einstechen der Gabelzinken der hydraulischen Hebevorrichtungen an den seitlich zugänglichen Längsseiten der Ballen erfolgen, da die Schmalseiten aufgrund der normalerweise zu geringen Abstände der Ballen voneinander nicht zugänglich sind.

Da die raumökonomische Verladung solcher quaderförmigen Ballen auf einem Anhänger oder Ladewagen jedoch in aller Regel ein Stapeln mit zueinander weisenden Längsseiten und quer zur Fahrtrichtung des Anhängers oder Ladewagens weisenden Schmalseiten erfordert, ist ein mindestens einmaliges Umsetzen der Ballen vor ihrem Verladen unumgänglich.

Da ähnliche logistischen Unzulänglichkeiten im Stand der Technik bereits früher erkannt worden waren, wurden bereits verschiedene Varianten an Ballenpressen mit Handhabungseinrichtungen zum Drehen von fertiggestellten Ballen vorgeschlagen. So wird etwa in der US 4 162 135 eine Greif- und Drehvorrichtung für fertiggestellte Rundballen offenbart, die sich heckseitig an einer Rundballenpresse befindet und die in der Lage sein soll, die Rundballen vor ihrem Ablegen auf dem Feld um einen definierten Drehwinkel um eine Hochachse zu drehen.

Die DE 1 215 998 B offenbart eine Ballenführung am Ausgang des Presskanals einer Ballenpresse, die dazu dienen soll, eine als nachteilig erkannte unregelmäßige und wahllose Ablage von quaderförmigen Ballen zu vermeiden. Es wird daher eine kombinierte Vorrichtung zum Wenden und zur Lagekorrektur der Ballen vorgeschlagen, indem ein Bodenblech eines Presskanalaustritts mitsamt einer verstellbaren Leitvorrichtung die ausgeworfenen Ballen um etwa 90° um deren horizontale Längsachse kippen kann. Ein den Presskanal verlassender Ballen passiert eine Rutsche und kippt infolge eines teilweise ausgesparten Bodenblechs in eine definierte seitliche Richtung ab, wobei diese Drehbewegung auf einen Drehwinkel von 90° begrenzt ist, wodurch alle ausgeworfenen Ballen zwangsläufig auf einer schmalen Längskante liegen bleiben.

Zu diesem bekannten System ähnliche Kippeinrichtung, die jeweils heckseitig an den Auswurfseiten von Ballenpressen montiert sind, finden sich zudem in der US 2 853 171, in der US 3 161 008 A sowie in der US 5 024 152 A offenbart.

Aus der US 5 560 191 A ist eine landwirtschaftliche Halmgutpresse zum Pressen von quaderförmigen Ballen bekannt, bei der die Ballen heckseitig aus einem Pressbereich auf einen Ablagetisch ausgeschoben werden, der eine drehbare und schräg in heckseitige Richtung absenkbare Plattform aufweist, so dass der jeweils abzulegende Ballen gleichzeitig um 90° um eine Hochachse gedreht werden kann. Da außer dieser Auflageplattform keine weiteren Leiteinrichtungen vorhanden sind, ist die Ballenablage auf dem Boden vergleichsweise unpräzise.

Eine in mancherlei Hinsicht ähnliche mechanische Vorrichtung findet sich in der US 6 033 172 A offenbart. Dort wird eine sich heckseitig an einer Ballenpresse ankoppelbare Dreh- und Ablagevorrichtung beschrieben, die einen um eine Hochachse drehbaren und gleichzeitig schräg nach hinten kippbarer Auflagetisch zur Ablage einzelner Ballen auf dem Boden aufweist, wobei die Ballen vor ihrer Ablage auf dem Boden gedreht werden können. Da die Ballen lediglich durch ihr Eigengewicht von dem schräggestellten Auflagetisch abgleiten und auf den Boden gelegt werden, fehlt auch hier die Ablagepräzision.

Das vorrangige Ziel der vorliegenden Erfindung besteht darin, eine herkömmliche Halmgutpresse, insbesondere in Gestalt einer Packen- oder Großpackenpresse mit möglichst geringem konstruktivem Aufwand in einer Weise auszustatten, dass damit die gepressten und in Ablagerichtung aus der Presse herausgeförderten Ballen vor ihrer Ablage am Boden um einen definierten Drehwinkel um eine insbesondere vertikale Drehachse gedreht werden können.

Dieses Ziel der Erfindung wird mit den Gegenständen der unabhängigen Ansprüche erreicht. Merkmale vorteilhafter Weiterbildungen der Erfindung finden sich in den jeweiligen abhängigen Ansprüchen.

So schlägt die Erfindung zur Erreichung des genannten Ziels eine landwirtschaftliche Halmgutpresse zum Pressen von insbesondere quaderförmigen Ballen oder Großballen vor, die mit einer Aufnahmeeinrichtung zum Aufnehmen von Erntegut, mit einem der Aufnahmeeinrichtung in Förderrichtung des Erntegutes nachgeordneten optionalen Schneidmodul zum Zerkleinern des Erntegutes sowie mit einer dem optional vorhandenen Schneidmodul nachgeordneten Presseinrichtung zum Pressen des Erntegutes zu Ballen definierter Größe ausgestattet ist.

Der Presseinrichtung ist vorzugsweise eine Bindeeinrichtung zugeordnet, die Garn um einen fertig gepressten Ballen oder Großballen wickeln und verknoten kann, da es normalerweise notwendig ist, mittels Pressen verdichtete Ballen oder Großballen in ihrer Form zu fixieren, was in der Praxis sinnvollerweise mittels Umschnürens und anschließenden Verknotens der Umschnürungen erfolgen kann.

Weiterhin umfasst die Halmgutpresse eine der Presseinrichtung nachgeordnete Förder- und/oder Ablageeinrichtung zum Auswerfen fertig gepresster und mit Garn umwickelter Ballen oder Großballen.

Die erfindungsgemäße landwirtschaftliche Halmgutpresse ist außerdem mit einer der Presseinrichtung nachgeordneten Förder- und/oder Ablageeinrichtung zum Auswerfen fertig gepresster und mit Garn umwickelter Ballen ausgestattet. Diese Förder- und/oder Ablageeinrichtung weist einen um eine in etwa vertikale Achse drehbaren Auflagetisch mit einer sich daran seitlich anschließenden Schrägrampe zum kontrollierten Ablegen von Ballen auf dem Boden auf. Dem drehbaren Auflagetisch ist zudem eine Schiebeeinrichtung zum Abschieben von auf dem Auflagetisch befindlichen Ballen oder Großballen zur Schrägrampe zugeordnet.

Diese Konfiguration erlaubt es, die gepressten, verschnürten und am Boden abgelegten quaderförmigen Ballen oder Großballen in einer Weise am Boden anzuordnen, dass sie leichter und schneller als bisher mittels entsprechend hierfür vorbereiteter Handhabungsgeräte aufgenommen und platzsparend gestapelt werden können. Da auf diese Weise die gepressten und in Ablagerichtung aus der Presse herausgeförderten Ballen vor ihrer Ablage am Boden um einen definierten Drehwinkel um eine insbesondere vertikale Drehachse gedreht wurden, sind nun ihre bei üblicher Ablage normalerweise nicht gut erreichbaren Schmalseiten seitlich für einen Einstechvorgang mittels Gabelzinken zugänglich, so dass sie folglich auch mit einer Annäherung von einer Seite der Ablagereihe aufgenommen und ohne weiteren Dreh- oder Absetzvorgang auf einem Anhänger abgelegt und gestapelt werden können.

Hierbei können die quaderförmigen Ballen oder Großballen mit ihren Längsseiten aneinander liegend, was insbesondere bei einer mehrreihigen Ablage von Vorteil ist und schnellere Stapel- und Ablagevorgänge erlaubt, und dies in dichterer Packung der Ballen oder Großballen als bei einer herkömmlichen Ablage.

Bei der erfindungsgemäßen landwirtschaftlichen Halmgutpresse kann der Auflagetisch insbesondere mit parallel zueinander angeordneten Rollen ausgestattet sein, die eine Auflagefläche zum horizontalen Befördern von Ballen bilden, und auf denen die Ballen mit geringem Widerstand abrollen bzw. abwälzen können, während sie über die Schrägrampe abgeschoben und auf dem Boden abgelegt werden können.

Wahlweise können die die Rollen des Auflagetischs passiv gelagert sein, so dass sie jeweils frei um ihre horizontalen Drehachsen rotieren können, wenn ein Ballen auf den Rollen bewegt wird. Die Oberseiten mehrerer parallel angeordneter Rollen bilden somit die Auflagefläche des Auflagetischs. Denkbar ist es jedoch auch, dass die Rollen des Auflagetischs jeweils mit Antrieben versehen sind, um Ballen abschieben und auf dem Boden ablegen zu können. Hierbei kann es jedoch auch genügen, nur einzelne Rollen anzutreiben und benachbarte Rollen passiv und frei drehbar auszugestalten, weil dies für ein aktives Bewegen von Ballen auf der Auflagefläche und deren Überschieben völlig genügen kann.

Um ein schnelles Abschieben eines vollständig auf der Auflagefläche des Auflagetischs überführten quaderförmigen Ballens gewährleisten zu können, kann die Schiebeeinrichtung mindestens einen Schubbalken umfassen, der in horizontaler Richtung und/oder parallel zur Auflagefläche des Auflagetischs über diesen bewegbar ist. Mit diesem Schubbalken der Schiebeeinrichtung können die Ballen in Richtung zur schrägen Rampe befördert und vor dort auf dem Boden abgelegt werden.

Eine weitere Ausführungsvariante der erfindungsgemäßen landwirtschaftlichen Halmgutpresse kann zudem vorgesehen sein, dass der bewegliche Auflagetisch drehbar auf einem Rahmenabschnitt gelagert ist, der mit der Halmgutpresse an deren Heck gekoppelt und/oder am Heck der Halmgutpresse angehängt ist.

Hierbei kann es sich als vorteilhaft erweisen, wenn sich unterhalb des Auflagetischs mindestens ein am Boden abrollendes Stützrad befindet, welches ggf. auch als Zwillings-Stützrad ausgebildet sein kann. Ein solches Stützrad oder Zwillings-Stützrad kann vermeiden, dass ein zu großes Gewicht aus heckseitig angelenktem Auflagetisch mitsamt daran befestigter Schrägrampe sowie davon getragenem Ballen ohne zusätzliche Stütze freitragend am Heck der Halmgutpresse aufgehängt sein muss. Dagegen kann ein am Boden abrollendes Stützrad oder eine geeignete Stützradkonstruktion diese nicht unerheblichen Gewichte problemlos abstützen und die gelenkige Verbindung zur Halmgutpresse mechanisch entlasten.

Der Rahmenabschnitt kann bspw. als Anhänger ausgebildet sein, der heckseitig an der Halmgutpresse angehängt und lösbar mit dieser gekoppelt ist. Ein solcher Anhänger umfasst sinnvollerweise das bereits erwähnte Stützrad oder die erwähnte Stützradkonstruktion.

Alternativ hierzu kann der Rahmenabschnitt auch klappbar heckseitig an der Halmgutpresse aufgehängt sein und ein bewegliches Teil dieser Halmgutpresse bilden, der fest mit der Halmgutpresse verbunden bleibt, wobei der Rahmenabschnitt im Benutzungsfall ebenfalls als Anhänger oder als anhängerähnliches Element ausgebildet sein kann.

Eine weitere sinnvolle Option kann darin bestehen, dass die an einer Längs- oder Schmalseite des drehbaren Auflagetischs befindliche Schrägrampe in ihrem Winkel zur Auflagefläche des Auflagetischs variabel einstellbar sein kann, um etwa unterschiedliche Bodenverhältnisse auszugleichen oder unterschiedliche Abstände einer Unterkante der Schrägrampe zum Boden einstellen zu können.

Außerdem kann es von Vorteil sein, wenn die Schrägrampe mehrere Rollen umfasst, welche gemeinsam eine Förderebene für die Ballen bilden, welche auf dieser schrägen Förderebene abrollen können. Wahlweise können die Rollen der Schrägrampe jeweils passiv gelagert sein, wobei sie jeweils um horizontale Drehachsen rotieren, wobei diese Drehachsen in etwa quer zur Förder- und Abschubrichtung der darauf abwälzenden Ballen liegen, so dass sie die Förder- oder Abwälzbewegung in optimaler Weise unterstützen können.

Alternativ hierzu können die Rollen der Schrägrampe wahlweise jeweils mit Antrieben versehen sein, um Ballen abschieben und auf dem Boden ablegen zu können.

Bei der erfindungsgemäßen landwirtschaftlichen Halmgutpresse ist es insbesondere sinnvoll, den Auflagetisch zwischen zwei Endlage um etwa 90° um die vertikale Drehachse bewegen zu können. Hierbei kann eine erste Endlage dadurch gebildet sein, dass die Schmalseiten des Auflagetischs quer zu einer Fahrtrichtung oder Längsrichtung der Halmgutpresse ausgerichtet sind, und dass die Längsseiten des Auflagetischs parallel zur Fahrtrichtung ausgerichtet sind und dabei gleichzeitig mit den Längsseiten der Halmgutpresse fluchten.

Diese erste Endlage bildet den Standardfall, bei dem die Ballen in üblicher Weise mit ihrer nach hinten weisenden Schmalseiten voran aus der Halmgutpresse ausgegeben werden, so dass ihre längeren Seiten parallel zur Fahrtrichtung der Halmgutpresse ausgerichtet sind.

Die Schrägrampe ist in der ersten Endlage ebenfalls parallel zur Fahrtrichtung oder Längsrichtung der Halmgutpresse ausgerichtet und befindet sich dabei an einer Längsseite der Förder- und/oder Ablageeinrichtung der Halmgutpresse.

Um die Ballen jedoch in der gewünschten Weise zu drehen und einem optimierten Stapelvorgang zugänglich zu machen, sollten die Ballen um etwa 90° um ihre jeweiligen vertikalen Mittelachsen gedreht werden. Somit ist eine zweite Endlage dadurch gebildet, dass die Längsseiten des Auflagetischs quer zu einer Fahrtrichtung oder Längsrichtung der Halmgutpresse ausgerichtet sind, und dass die Schmalseiten des Auflagetischs parallel zur Fahrtrichtung ausgerichtet sind und dabei mit den Längsseiten der Halmgutpresse fluchten.

Die Schrägrampe ist in der zweiten Endlage quer zur Fahrtrichtung oder Längsrichtung der Halmgutpresse ausgerichtet und befindet sich dabei heckseitig an der Förder- und/oder Ablageeinrichtung bzw. weist dabei in eine Richtung entgegengesetzt zur Fahrtrichtung der Halmgutpresse, so dass die gedrehten Ballen rückseitig abgelegt werden können.

Sinnvollerweise kann der Auflagetisch mit einem motorisch betriebenen Aktor gekoppelt sein, der für eine gesteuerte Drehung und Rückdrehung und/oder für eine Drehbewegung zwischen den beiden Endlagen sorgen kann. Ein solcher Aktor kann bspw. ein motorischer Direktantrieb sein, der den Auflagetisch in der gewünschten Weise drehen kann. Ebenso denkbar sind auch andere Aktoren, bspw. hydraulisch oder pneumatisch betätigbare Stellzylinder, die vorzugsweise unterhalb des Auflagetischs angeordnet sind und diesen in der gewünschten Weise verdrehen oder verschwenken können.

Außerdem kann bei der erfindungsgemäßen landwirtschaftlichen Halmgutpresse auch die Schiebeeinrichtung mit einem motorisch betriebenen Aktor gekoppelt sein, der für eine gesteuerte Bewegung und Rückbewegung des Schubbalkens in lineare Richtung sorgen kann. Auch hierfür eignen sich bspw. hydraulisch oder pneumatisch betätigbare Stellzylinder, die für die erforderliche Linearbewegung sorgen können.

Zur Erreichung des oben genannten Ziels schlägt die vorliegende Erfindung neben der in verschiedenen Ausführungsvarianten erläuterten landwirtschaftlichen Halmgutpresse außerdem ein Verfahren zur Ablage von insbesondere quaderförmigen Ballen oder Großballen vor, die mittels einer landwirtschaftlichen Halmgutpresse aus vom Boden aufgenommenem Erntegut gepresst wurden, insbesondere mittels einer landwirtschaftlichen Halmgutpresse gemäß einer der zuvor erläuterten Ausführungsvarianten. Bei diesem erfindungsgemäßen Verfahren werden die Ballen nach dem Pressen über eine heckseitig an der Halmgutpresse angeordnete Förder- und/oder Ablageeinrichtung ausgegeben, dort um eine in etwa vertikale Achse gedreht und mittels einer Schiebeeinrichtung zu einer Schrägrampe überschoben und kontrolliert auf dem Boden abgelegt.

Bei dem Verfahren werden die Ballen vorzugsweise um etwa 90° um eine in etwa vertikale Achse gedreht und mit ihren Längsseiten quer zur Fahrtrichtung auf dem Boden abgelegt. D.h., durch das Drehen der Ballen um etwa 90° um eine in etwa vertikale Achse werden sie mit ihren Schmalseiten parallel zur Fahrtrichtung auf dem Boden abgelegt.

Dabei werden die Ballen über die rückseitig an der Halmgutpresse angeordnete Schrägrampe in einer Fahrspur der Halmgutpresse abgelegt. Um dies zu ermöglichen, wird der Auflagetisch der Halmgutpresse jeweils dann um etwa 90° gedreht, wenn sich ein Ballen auf diesem befindet. Im Anschluss an eine Drehbewegung des Auflagetischs mit darauf befindlichem Ballen kann der Schubbalken aktiviert und der Ballen nach hinten über die Schrägrampe abgeschoben und auf dem Boden abgelegt werden.

Im Anschluss an ein Abschieben eines Ballens vom Auflagetisch mittels des Schubbalkens kann der Auflagetisch wieder zurückgedreht werden, um einen weiteren Ballen aufnehmen zu können, der aus der Halmgutpresse herausgefördert wird.

Es sei an dieser Stelle ausdrücklich erwähnt, dass alle Aspekte und Ausführungsvarianten, die im Zusammenhang mit der erfindungsgemäßen Halmgutpresse erläutert wurden, gleichermaßen Teilaspekte des erfindungsgemäßen Verfahrens zur Ballenablage betreffen oder bilden können. Wenn daher an einer Stelle bei der Beschreibung oder auch bei den Anspruchsdefinitionen zur erfindungsgemäßen Halmgutpresse von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren zur Ablage von insbesondere quaderförmigen Ballen erläutert wurden, gleichermaßen Teilaspekte der erfindungsgemäßen landwirtschaftlichen Halmgutpresse betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Halmgutpresse.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So kann, wie bereits oben mehrfach erwähnt, die erfindungsgemäße landwirtschaftliche Halmgutpresse in bekannter Weise dem Pressen von quaderförmigen Ballen oder Großballen dienen. Da eine solche Halmgutpresse im Gegensatz zu einer sog. Ballenpresse keine zylindrischen Halmgutballen formt, sondern quaderförmige Ballen, wird sie üblicherweise auch als Packenpresse oder Großpackenpresse bezeichnet.

Eine solche landwirtschaftliche Halmgutpresse weist normalerweise eine frontseitige Zugdeichsel auf, so dass die Halmgutpresse ein gezogenes Fahrzeug ohne eigenen Antrieb ist, das an einer geeigneten Anhängevorrichtung an einem Heckbereich einer landwirtschaftlichen Zugmaschine wie bspw. einem Traktor angehängt werden kann. Das Fahrgestell der Halmgutpresse kann bspw. eine Zwillingsachse mit insgesamt vier relativ breit bereiften Stützrädern aufweisen, so dass auch schwerere Lasten ohne zu hohe Bodendrücke auf dem Feld abgestützt werden können.

Oberseitig des Fahrgestells kann sich ein Gehäuse befinden, in dem nachfolgend erläuterte Komponenten der landwirtschaftlichen Halmgutpresse aufgenommen sind.

Unmittelbar hinter und unterhalb der Zugdeichsel und deutlich vor der Zwillingsachse mit den insgesamt vier Stützrädern befindet sich eine zum Boden reichende Aufnahmeeinrichtung, die auch als Pick-Up bezeichnet werden kann, und die dem Aufnehmen von Erntegut oder Halmgut dient. Mit dem hier allgemein verwendeten Begriff des Erntegutes oder von Halmgut sind hier insbesondere Ernterückstände von einem Mähdruschvorgang oder auch getrocknetes Heu nach einem Mähvorgang einer Wiese o. dgl. gemeint.

Damit die Aufnahmeeinrichtung mit einer darin befindlichen, um eine horizontale und quer zu einer Längsmittelachse der Halmgutpresse rotierenden und normalerweise angetriebenen Zinkenwalze oder Zuführwalze einen gleichbleibenden Abstand zum Boden einhalten kann, können wahlweise seitliche Stützräder oder Stützrollen an der Aufnahmeeinrichtung vorgesehen sein.

Der Materialfluss durch die Halmgutpresse verläuft von vorne nach hinten durch die gesamte Maschine. Demzufolge befindet sich zwischen dem Gehäuse und der Aufnahmeeinrichtung in Förderrichtung des Erntegutes ein der Aufnahmeeinrichtung nachgeordnetes Schneidmodul, das dem Zerkleinern des Erntegutes dient. Wahlweise kann das Schneidmodul bspw. eine Messerkassette mit einer Vielzahl von dort befestigten oder gelagerten Schneidmessern sowie eine mit den Schneidmessern der Messerkassette in schneidendem Eingriff stehende rotierende Messerwalze umfassen. Die Schneidmesser der Messerkassette können insbesondere motorisch verstellt werden, um die Halmlänge des zu pressenden Halmgutes oder Erntegutes variieren zu können, so dass je nach Einstellung der Schneidmesser unterschiedliche Halmlängen eingestellt und das aufgenommene Halmgut entsprechend geschnitten werden kann.

Außerdem umfasst die Halmgutpresse eine dem Schneidmodul nachgeordnete Presseinrichtung, die sich innerhalb des Gehäuses befindet. Die Presseinrichtung dient dem Pressen des aufgenommenen und in Materialflussrichtung durch die Maschine beförderten Erntegutes zu Ballen definierter Größe, wobei der Presseinrichtung außerdem eine Bindeeinrichtung zugeordnet ist, die Garn um einen fertig gepressten Ballen oder Großballen wickelt und verknotet.

Schließlich befindet sich heckseitig am Gehäuse eine der Presseinrichtung nachgeordnete Förder- und/oder Ablageeinrichtung, durch welche die fertig gepressten und mit Garn umwickelten Ballen oder Großballen in einer Längsrichtung, d.h. in etwa parallel zur Längsmittelachse der Halmgutpresse, ausgeschoben oder ausgeworfen werden. Diese Förder- und/oder Ablageeinrichtung wird oftmals auch als Schurre bezeichnet.

Der Materialfluss reicht vom Boden vor der Aufnahmeeinrichtung durch die Aufnahmeeinrichtung zum Schneidmodul und führt von dort ins Gehäuse mit der darin befindlichen Presseinrichtung, bevor er durch die Schurre bzw. die Förder- und/oder Ablageeinrichtung nach hinten aus dem Heck der Halmgutpresse hinausführt. Der Materialfluss ist damit im Wesentlichen entgegengesetzt zur normalen Fahrtrichtung der Halmgutpresse orientiert.

In einem Bereich hinter der Schurre können die ausgeworfenen quaderförmigen Ballen oder Großballen zudem wahlweise um eine Hochachse gedreht werden. Im Bereich hinter der Schurre werden die auf einer heckseitig nachgeordneten Förder- und/oder Ablageeinrichtung befindlichen Ballen mittels eines um eine in etwa vertikale Achse drehbaren Auflagetischs mit einer sich daran randseitig anschließenden Schrägrampe zunächst um 90° um die vertikale Achse gedreht und anschließend in dieser gedrehten Lage nach hinten abgeschoben.

Zu diesem Zweck ist dem drehbaren Auflagetisch eine Schiebeeinrichtung zum Abschieben von auf dem Auflagetisch befindlichen Ballen oder Großballen zur Schrägrampe zugeordnet.

Wahlweise kann der Auflagetisch z.B. durch mehrere miteinander verbundene Vierkantrohre gebildet sein, auf deren flachen Oberseiten mittels der Schiebeeinrichtung bewegte Ballen gleiten können. Die flachen Oberseiten der Vierkantrohre bilden hierbei eine Auflagefläche des Auflagetischs.

Die Schiebeeinrichtung kann insbesondere einen Schubbalken umfassen, der in horizontaler Richtung und damit auch parallel zur Auflagefläche des Auflagetischs in geringem Abstand zu diesem über diesen bewegbar ist. Mit diesem Schubbalken der Schiebeeinrichtung können die Ballen in Richtung zur schrägen Rampe befördert und vor dort auf dem Boden abgelegt werden.

Damit der Auflagetisch um die vertikale Drehachse bewegt werden kann, ist er drehbar auf einem Rahmenabschnitt oder Fahrgestell gelagert, der/das mit der Halmgutpresse gekoppelt und an deren Heck angehängt ist. Wahlweise kann sich in etwa mittig unterhalb des Auflagetischs ein am Boden abrollendes Zwillings-Stützrad befinden, wodurch alle entstehenden Gewichtskräfte problemlos am Boden abgestützt und die gelenkige Verbindung zur Halmgutpresse mechanisch entlastet werden können.

Der Rahmenabschnitt mit dem darauf drehbar gelagerten Auflagetisch ist insbesondere klappbar heckseitig an der Halmgutpresse aufgehängt und bildet auf diese Weise ein bewegliches Teil der Halmgutpresse. Der Rahmenabschnitt bleibt fest mit der Halmgutpresse verbunden, wobei er im Benutzungsfall als Anhänger oder als anhängerähnliches Element ausgebildet sein kann, das sich auf dem Stützrad rollend am Boden abstützt.

Wahlweise kann die an einer Längsseite des drehbaren Auflagetischs befindliche Schrägrampe in ihrem Winkel zur Auflagefläche des Auflagetischs variabel einstellbar sein, um etwa unterschiedliche Bodenverhältnisse auszugleichen oder unterschiedliche Abstände einer Unterkante der Schrägrampe zum Boden einstellen zu können.

Außerdem kann die Schrägrampe mehrere drehbare Rollen umfassen, welche gemeinsam eine Förderebene für die Ballen bilden, welche auf dieser schrägen Förderebene abrollen können. Wahlweise können die Rollen der Schrägrampe jeweils passiv gelagert sein, wobei sie jeweils um horizontale Drehachsen rotieren, wobei diese Drehachsen in etwa quer zur Förder- und Abschubrichtung der darauf abwälzenden Ballen liegen, so dass sie die Förder- oder Abwälzbewegung in optimaler Weise unterstützen können.

In einer ersten Endlage des drehbaren Auflagetischs der Förder- und/oder Ablageeinrichtung sind die Schmalseiten des Auflagetischs quer zur Fahrtrichtung oder Längsrichtung der Halmgutpresse ausgerichtet, während die Längsseiten des Auflagetischs parallel zur Fahrtrichtung ausgerichtet sind und dabei gleichzeitig mit den Längsseiten der Halmgutpresse fluchten. Diese erste Endlage bildet den Standardfall, bei dem die Ballen in üblicher Weise mit ihrer nach hinten weisenden Schmalseiten voran aus der Halmgutpresse ausgegeben werden, so dass ihre längeren Seiten parallel zur Fahrtrichtung der Halmgutpresse ausgerichtet sind.

Die Schrägrampe ist in dieser ersten Endlage ebenfalls parallel zur Fahrtrichtung oder Längsrichtung der Halmgutpresse ausgerichtet und befindet sich dabei an einer Längsseite des Auflagetischs der Förder- und/oder Ablageeinrichtung. In dieser ersten Endlage des Auflagetischs werden die Ballen auf die Auflagefläche des Auflagetischs geschoben.

Eine zweite Endlage des Auflagetischs ist dadurch gebildet, dass die Längsseiten des Auflagetischs quer zur Fahrtrichtung oder Längsrichtung der Halmgutpresse ausgerichtet sind, und dass die Schmalseiten des Auflagetischs parallel zur Fahrtrichtung ausgerichtet sind und dabei mit den Längsseiten der Halmgutpresse fluchten. Die Schrägrampe ist in der zweiten Endlage quer zur Fahrtrichtung oder Längsrichtung der Halmgutpresse ausgerichtet und befindet sich dabei heckseitig an der Förder- und/oder Ablageeinrichtung bzw. weist dabei in eine Richtung entgegengesetzt zur Fahrtrichtung der Halmgutpresse, so dass die gedrehten Ballen rückseitig abgelegt werden können.

Die solchermaßen gedrehten Ballen werden mit ihren Längsseiten quer zur Fahrtrichtung und entgegengesetzt zu dieser nach hinten über die Schrägrampe abgelegt. Nach Ablage eines Ballens in der beschriebenen Orientierung kann der Auflagetisch wieder um 90° in die zuvor gezeigte Ausgangslage zurückgedreht werden, d.h. in die erste Endlage.

Wahlweise kann der Auflagetisch mit einem motorisch betriebenen Aktor oder Antriebsmotor gekoppelt sein, der für eine gesteuerte Drehung und Rückdrehung und/oder für eine Drehbewegung zwischen den beiden Endlagen sorgen kann. Ein solcher Aktor kann bspw. ein motorischer Direktantrieb sein, der den Auflagetisch in der gewünschten Weise drehen kann. Ebenso denkbar sind auch andere Aktoren, bspw. hydraulisch oder pneumatisch betätigbare Stellzylinder, die vorzugsweise unterhalb des Auflagetischs angeordnet sind und diesen in der gewünschten Weise verdrehen oder verschwenken können.

Außerdem kann vorzugsweise auch die Schiebeeinrichtung mit einem motorisch betriebenen Aktor gekoppelt sein, der für eine gesteuerte Bewegung und Rückbewegung des Schubbalkens in lineare Richtung sorgen kann. Auch hierfür eignen sich bspw. hydraulisch oder pneumatisch betätigbare Stellzylinder, die für die erforderliche Linearbewegung sorgen können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1A zeigt eine Ausführungsvariante einer landwirtschaftlichen Halmgutpresse in perspektivischer Ansicht.
Fig. 1B zeigt in schematischer Weise die Handhabung eines Ballens nach dem Auswerfen aus einer Halmgutpresse, wie sie in Fig. 1A gezeigt ist.
Fig. 1C zeigt in schematischer Weise die nachfolgende Drehung eines Ballens nach dem Auswerfen aus einer Halmgutpresse.
Fig. 1D zeigt in schematischer Weise das nachfolgende heckseitige Abschieben eines gedrehten Ballens von einer heckseitig an der Halmgutpresse angeordneten Ablageeinrichtung.
Fig. 2 zeigt in insgesamt vier schematischen Ansichten (Fig. 2A, Fig. 2B, Fig. 2C und Fig. 2D) eine erste Endlage eines drehbaren Auflagetischs zur Aufnahme eines quaderförmigen Ballens.
Fig. 3 zeigt in insgesamt drei schematischen Ansichten (Fig. 3A, Fig. 3B und Fig. 3C) eine zweite Endlage des drehbaren Auflagetischs zum Abschieben eines auf dem Auflagetisch befindlichen quaderförmigen Ballens quer zur ursprünglichen Ausrichtung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Auch sind die nachfolgend beschriebenen Merkmale jeweils nicht in engem Zusammenhang mit weiteren Merkmalen des jeweiligen Ausführungsbeispiels zu verstehen, sondern können jeweils im allgemeinen Zusammenhang vorgesehen sein bzw. hierfür Verwendung finden.

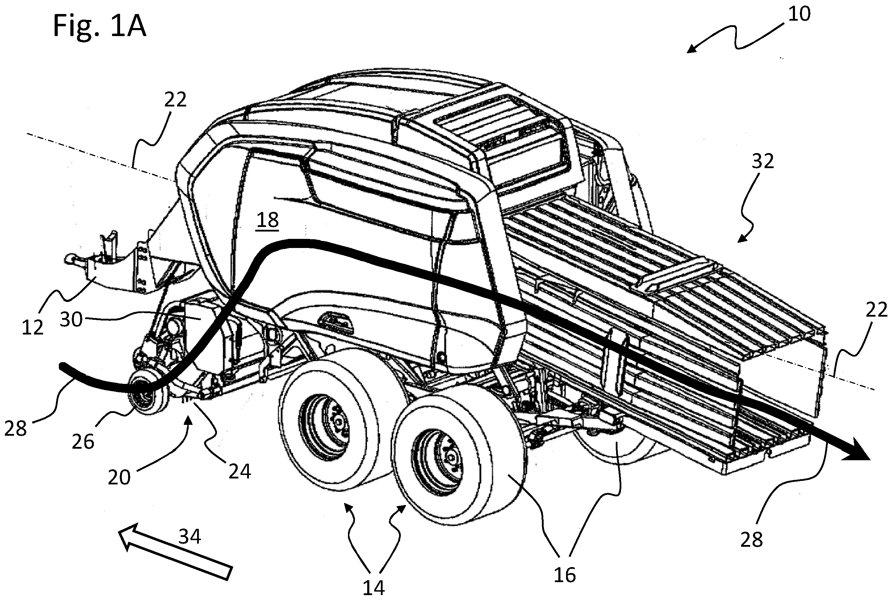

Die schematische Perspektivansicht der Fig. 1A zeigt eine Ausführungsvariante einer landwirtschaftlichen Halmgutpresse 10, die dem Pressen von quaderförmigen Ballen oder Großballen dient. Da eine solche Halmgutpresse 10 im Gegensatz zu einer sog. Ballenpresse keine zylindrischen Halmgutballen formt, sondern quaderförmige Ballen, wird sie üblicherweise auch als Packenpresse oder Großpackenpresse bezeichnet. Da diese Bezeichnungen in der Praxis nicht immer einheitlich sind und wahlweise verwendet werden können, werden im vorliegenden Zusammenhang allen diesen erwähnten Benennungen der landwirtschaftlichen Maschine - sei dies die Halmgutpresse, die Ballenpresse oder die Großballenpresse - jeweils die Bezugsziffer 10 zugewiesen.

Wie dies die perspektivische Ansicht der Fig. 1A von schräg hinten auf die linke Längsseite der landwirtschaftlichen Halmgutpresse 10 erkennen lässt, weist diese eine frontseitige Zugdeichsel 12 auf, so dass die Halmgutpresse 10 ein gezogenes Fahrzeug ohne eigenen Antrieb bilden kann, das an einer geeigneten Anhängevorrichtung an einem Heckbereich einer landwirtschaftlichen Zugmaschine (hier nicht gezeigt) angehängt werden kann. Das Fahrgestell der Halmgutpresse 10 weist eine Zwillingsachse 14 mit insgesamt vier relativ breit bereiften Stützrädern 16 auf, so dass auch schwerere Lasten ohne zu hohe Bodendrücke auf dem Feld abgestützt werden können.

Oberseitig des Fahrgestells ist ein Gehäuse 18 erkennbar, in dem weitere der nachfolgend erläuterten Komponenten der landwirtschaftlichen Halmgutpresse 10 aufgenommen sind.

Unmittelbar hinter und unterhalb der Zugdeichsel 12 und deutlich vor der Zwillingsachse 14 mit den insgesamt vier Stützrädern 16 befindet sich eine zum Boden reichende Aufnahmeeinrichtung 20, die oftmals auch als Pick-Up bezeichnet wird, und die dem Aufnehmen von Erntegut oder Halmgut dient. Mit dem hier allgemein verwendeten Begriff des Erntegutes oder von Halmgut sind hier insbesondere Ernterückstände von einem Mähdruschvorgang oder auch getrocknetes Heu nach einem Mähvorgang einer Wiese o. dgl. gemeint.

Damit die Aufnahmeeinrichtung 20 mit einer darin befindlichen, um eine horizontale und quer zu einer Längsmittelachse 22 der Halmgutpresse 10 rotierenden und normalerweise angetriebenen Zinkenwalze oder Zuführwalze 24 einen gleichbleibenden Abstand zum Boden einhalten kann, sind seitliche Stützräder 26 vorgesehen, wobei die Fig. 1A lediglich das linke dieser beiden Stützräder 26 erkennen lässt.

Der gesamte Materialfluss durch die Halmgutpresse 10 ist durch den Pfeil 28 angedeutet, der von vorne nach hinten durch die gesamte Maschine verläuft. Demzufolge befindet sich zwischen dem Gehäuse 18 und der Aufnahmeeinrichtung 20 in Förderrichtung des Erntegutes ein der Aufnahmeeinrichtung 20 nachgeordnetes Schneidmodul 30, das dem Zerkleinern des Erntegutes dient. Wahlweise kann das Schneidmodul 30 bspw. eine hier nicht näher gezeigte Messerkassette mit einer Vielzahl von dort befestigten oder gelagerten Schneidmessern sowie eine mit den Schneidmessern der Messerkassette in schneidendem Eingriff stehende rotierende Messerwalze (hier ebenfalls nicht gezeigt) umfassen.

Die Schneidmesser der Messerkassette können insbesondere motorisch verstellt werden, um die Halmlänge des zu pressenden Halmgutes oder Erntegutes variieren zu können, so dass je nach Einstellung der Schneidmesser unterschiedliche Halmlängen eingestellt und das aufgenommene Halmgut entsprechend geschnitten werden kann.

Außerdem umfasst die Halmgutpresse 10 eine dem Schneidmodul 30 nachgeordnete Presseinrichtung, die sich innerhalb des Gehäuses 18 befindet und deshalb hier nicht erkennbar ist. Die Presseinrichtung dient dem Pressen des aufgenommenen und in Materialflussrichtung 28 durch die Maschine 10 beförderten Erntegutes zu Ballen definierter Größe, wobei der Presseinrichtung außerdem eine Bindeeinrichtung (hier ebenfalls nicht dargestellt) zugeordnet ist, die Garn um einen fertig gepressten Ballen oder Großballen wickelt und verknotet.

Schließlich ist heckseitig am Gehäuse 18 eine der Presseinrichtung nachgeordnete Förder- und/oder Ablageeinrichtung 32 erkennbar, durch welche die fertig gepressten und mit Garn umwickelten Ballen oder Großballen in einer Längsrichtung, d.h. in etwa parallel zur Längsmittelachse 22 der Halmgutpresse 10, ausgeschoben oder ausgeworfen werden. Diese Förder- und/oder Ablageeinrichtung 32 wird oftmals auch als Schurre bezeichnet und soll im vorliegenden Zusammenhang generell mit der Bezugsziffer 32 bezeichnet werden.

Wie es die Fig. 1A erkennen lässt, reicht der den Materialfluss kennzeichnende Pfeil 28 vom Boden vor der Aufnahmeeinrichtung 20 durch die Aufnahmeeinrichtung 20 zum Schneidmodul 30 und führt von dort ins Gehäuse 18 mit der darin befindlichen Presseinrichtung, bevor er durch die Schurre 32 bzw. die Förder- und/oder Ablageeinrichtung 32 nach hinten aus dem Heck der Halmgutpresse 10 hinaus weist. Der Materialfluss 28 ist damit im Wesentlichen entgegengesetzt zur normalen Fahrtrichtung 34 der Halmgutpresse 10 orientiert, die in der Darstellung der Fig. 1A von rechts nach links weist.

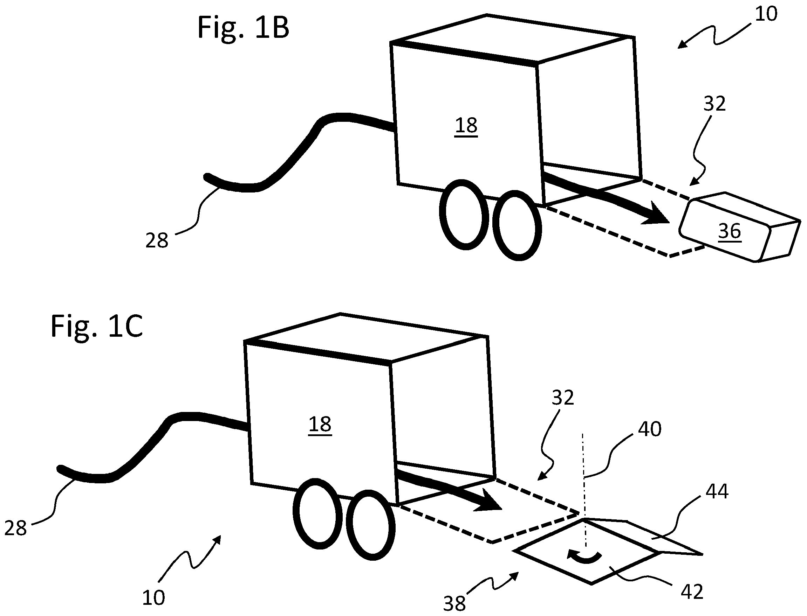

In einem Bereich hinter der in Fig. 1A gezeigten Schurre 32 können die ausgeworfenen quaderförmigen Ballen oder Großballen zudem wahlweise um eine Hochachse gedreht werden, was jedoch der besseren Übersichtlichkeit halber in Fig. 1A nicht gezeigt, sondern in schematischer Weise anhand der Fig. 1B sowie der Fig. 1C verdeutlicht werden soll. Dort ist zur besseren Veranschaulichung nochmals die Materialflussrichtung 28 durch die Halmgutpresse 10 gezeichnet, die hier nur als einfacher Kasten gezeichnet ist, um den Materialfluss 28 und die nachfolgenden Handhabungsschritte besser verdeutlichen zu können, denen die aus der Halmgutpresse 10 nach hinten herausbeförderten Ballen unterzogen werden.

Zunächst werden die gepressten und gebundenen quaderförmigen Ballen 36 aus dem Gehäuse 18 nach hinten in Materialflussrichtung 28 herausbefördert und an die heckseitig am Gehäuse 18 befindliche Schurre 32 übergeben, die für eine weitere Beförderung der Ballen in Pfeilrichtung sorgt (vgl. Fig. 1B).

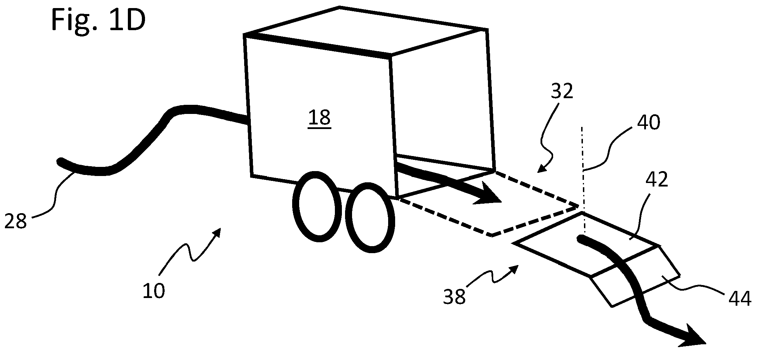

Erst im Bereich hinter der Schurre 32 werden die auf einer heckseitig nachgeordneten Förder- und/oder Ablageeinrichtung 38 befindlichen Ballen 36 (in Fig. 1C nicht gezeigt) mittels eines um eine in etwa vertikale Achse 40 drehbaren Auflagetischs 42 mit einer sich daran randseitig anschließenden Schrägrampe 44 zunächst um 90° um die vertikale Achse 40 gedreht und anschließend in dieser gedrehten Lage nach hinten abgeschoben (vgl. den weiteren Materialflusspfeil in Fig. 1D).

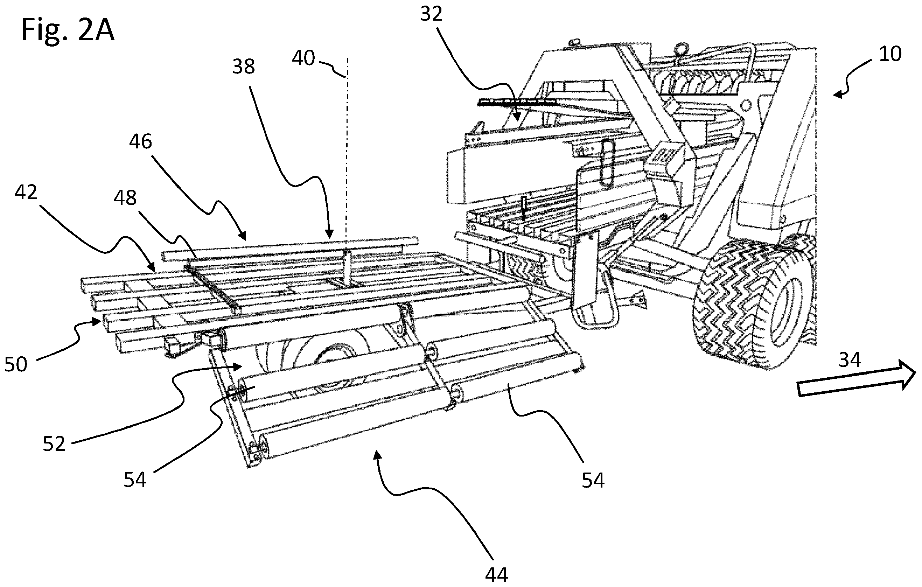

Die schematischen Ansichten der Figuren 2A bis 2D zeigen nochmals den Materialfluss eines heckseitig an der Halmgutpresse 10 ausgeschobenen quaderförmigen Ballens. Gezeigt ist jeweils die an der Rückseite der Halmgutpresse 10 befindliche Schurre 32, an die sich eine angehängte Förder- und/oder Ablageeinrichtung 38 zum Auswerfen fertig gepresster und mit Garn umwickelter Ballen oder Großballen anschließt.

Diese Förder- und/oder Ablageeinrichtung 38 weist einen um eine vertikale Achse 40 (vgl. Fig. 2A) drehbaren Auflagetisch 42 mit einer sich daran seitlich anschließenden Schrägrampe 44 zum kontrollierten Ablegen von Ballen auf dem Boden auf. Dem drehbaren Auflagetisch 42 ist zudem eine Schiebeeinrichtung 46 zum Abschieben von auf dem Auflagetisch 42 befindlichen Ballen oder Großballen zur Schrägrampe 44 zugeordnet.

Im gezeigten Ausführungsbeispiel ist der Auflagetisch 42 durch mehrere miteinander verbundene Vierkantrohre gebildet, auf deren flachen Oberseiten mittels der Schiebeeinrichtung 46 bewegte Ballen gleiten können. Die flachen Oberseiten der Vierkantrohre bilden eine Auflagefläche 50 des Auflagetischs.

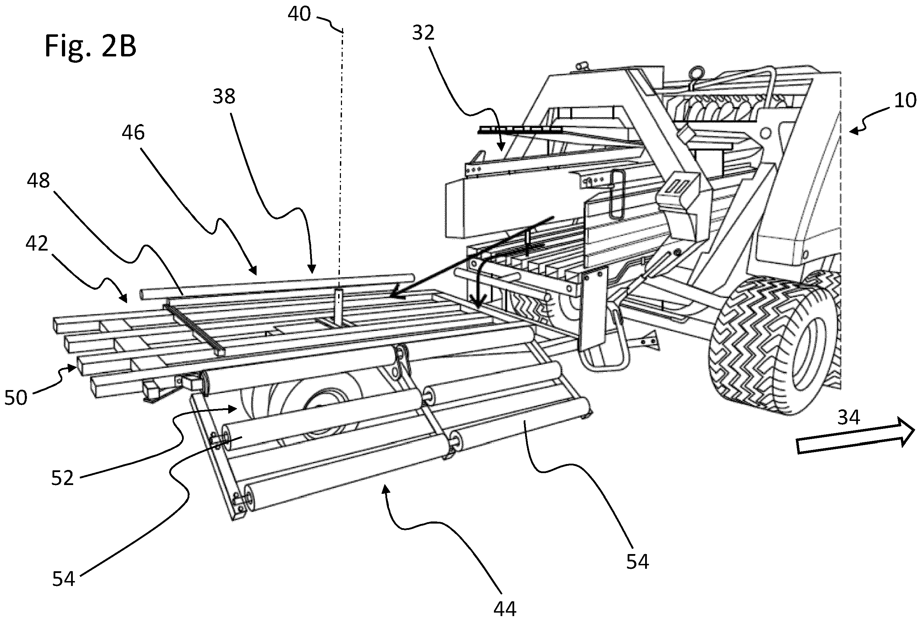

Wie es die Figuren 2A und 2B erkennen lassen, kann die Schiebeeinrichtung 46 insbesondere einen Schubbalken 48 umfassen, der in horizontaler Richtung und damit auch parallel zur Auflagefläche 50 des Auflagetischs 42 in geringem Abstand zu diesem über diesen bewegbar ist. Mit diesem Schubbalken 48 der Schiebeeinrichtung 46 können die Ballen in Richtung zur schrägen Rampe 44 befördert und vor dort auf dem Boden abgelegt werden.

Damit der Auflagetisch 42 um die vertikale Drehachse 40 bewegt werden kann, ist er drehbar auf einem Rahmenabschnitt oder Fahrgestell gelagert, der/das mit der Halmgutpresse 10 gekoppelt und an deren Heck angehängt ist. Wie es die Figuren 2A bis 3C erkennen lassen, befindet sich in etwa mittig unterhalb des Auflagetischs 42 ein am Boden abrollendes Zwillings-Stützrad 52, wodurch alle entstehenden Gewichtskräfte problemlos am Boden abgestützt und die gelenkige Verbindung zur Halmgutpresse 10 mechanisch entlastet werden können.

Der Rahmenabschnitt mit dem darauf drehbar gelagerten Auflagetisch 42 ist klappbar heckseitig an der Halmgutpresse 10 aufgehängt und bildet auf diese Weise ein bewegliches Teil der Halmgutpresse 10. Der Rahmenabschnitt bleibt fest mit der Halmgutpresse 10 verbunden, wobei er im Benutzungsfall (vgl. Figuren 2A bis 3C) in der gezeigten Weise als Anhänger oder als anhängerähnliches Element ausgebildet sein kann, das sich auf dem Stützrad 52 rollend am Boden abstützt.

Wahlweise kann die an einer Längsseite des drehbaren Auflagetischs 42 befindliche Schrägrampe 44 in ihrem Winkel zur Auflagefläche 50 des Auflagetischs 42 variabel einstellbar sein, um etwa unterschiedliche Bodenverhältnisse auszugleichen oder unterschiedliche Abstände einer Unterkante der Schrägrampe 44 zum Boden einstellen zu können.

Wie es die Figuren 2A bis 3C außerdem lassen, kann die Schrägrampe 44 mehrere drehbare Rollen 54 umfassen, welche gemeinsam eine Förderebene für die Ballen bilden, welche auf dieser schrägen Förderebene abrollen können. Wahlweise können die Rollen 54 der Schrägrampe 44 jeweils passiv gelagert sein, wobei sie jeweils um horizontale Drehachsen rotieren, wobei diese Drehachsen in etwa quer zur Förder- und Abschubrichtung der darauf abwälzenden Ballen liegen, so dass sie die Förder- oder Abwälzbewegung in optimaler Weise unterstützen können.

Die Fig. 2A zeigt die Förder- und/oder Ablageeinrichtung 38 mit dem drehbaren Auflagetisch 42 in einer ersten Endlage, bei der die Schmalseiten des Auflagetischs 42 quer zur Fahrtrichtung oder Längsrichtung der Halmgutpresse 10 ausgerichtet sind, während die Längsseiten des Auflagetischs 42 parallel zur Fahrtrichtung ausgerichtet sind und dabei gleichzeitig mit den Längsseiten der Halmgutpresse 10 fluchten. Diese erste Endlage bildet den Standardfall, bei dem die Ballen in üblicher Weise mit ihrer nach hinten weisenden Schmalseiten voran aus der Halmgutpresse 10 ausgegeben werden (vgl. Fig. 2B), so dass ihre längeren Seiten parallel zur Fahrtrichtung der Halmgutpresse 10 ausgerichtet sind.

Die Schrägrampe 44 ist in dieser ersten Endlage ebenfalls parallel zur Fahrtrichtung oder Längsrichtung der Halmgutpresse 10 ausgerichtet und befindet sich dabei an einer Längsseite des Auflagetischs 42 der Förder- und/oder Ablageeinrichtung 38 (vgl. Fig. 2A und Fig. 2B).

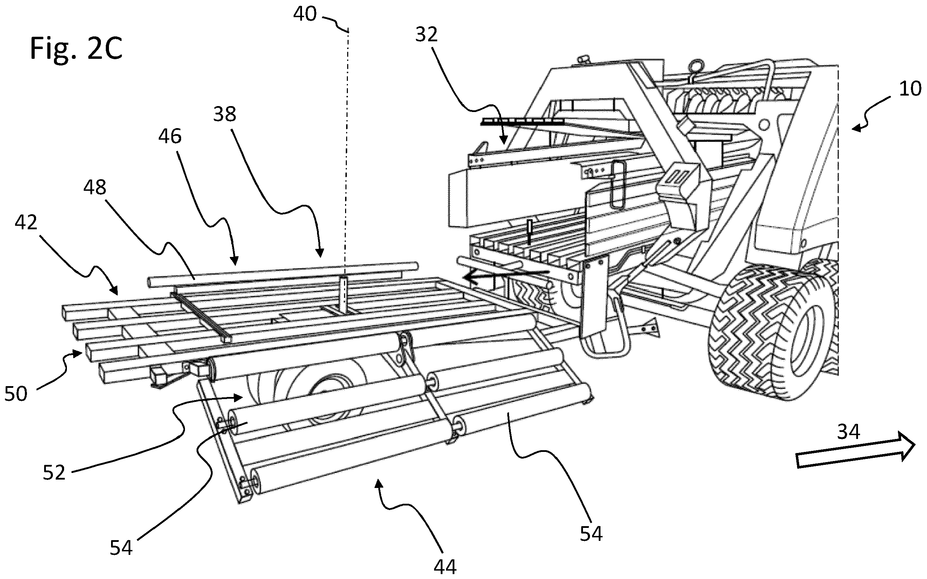

In dieser ersten Endlage des Auflagetischs 42 werden die Ballen auf die Auflagefläche 50 des Auflagetischs 42 geschoben (vgl. Fig. 2B und Fig. 2C).

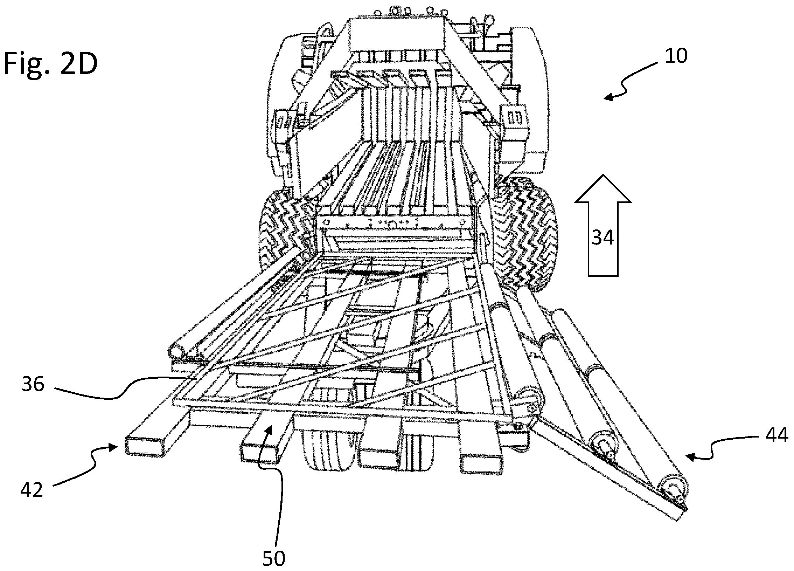

Die Heckansicht der Fig. 2D verdeutlicht mit einer Schraffur einen auf der Auflagefläche 50 liegenden quaderförmigen Ballen 36, dessen Längsseiten parallel zur Fahrtrichtung 34 angeordnet sind.

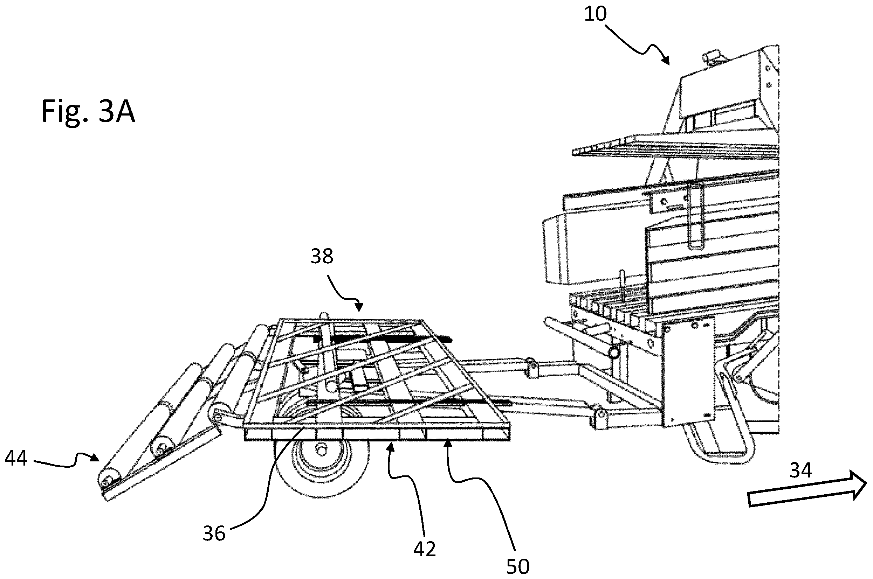

Die Figuren 3A bis 3C verdeutlichen eine zweite Endlage des Auflagetischs 42, die dadurch gebildet ist, dass die Längsseiten des Auflagetischs 42 quer zur Fahrtrichtung 34 oder Längsrichtung der Halmgutpresse 10 ausgerichtet sind, und dass die Schmalseiten des Auflagetischs 42 parallel zur Fahrtrichtung 34 ausgerichtet sind und dabei mit den Längsseiten der Halmgutpresse 10 fluchten (vgl. Fig. 3A).

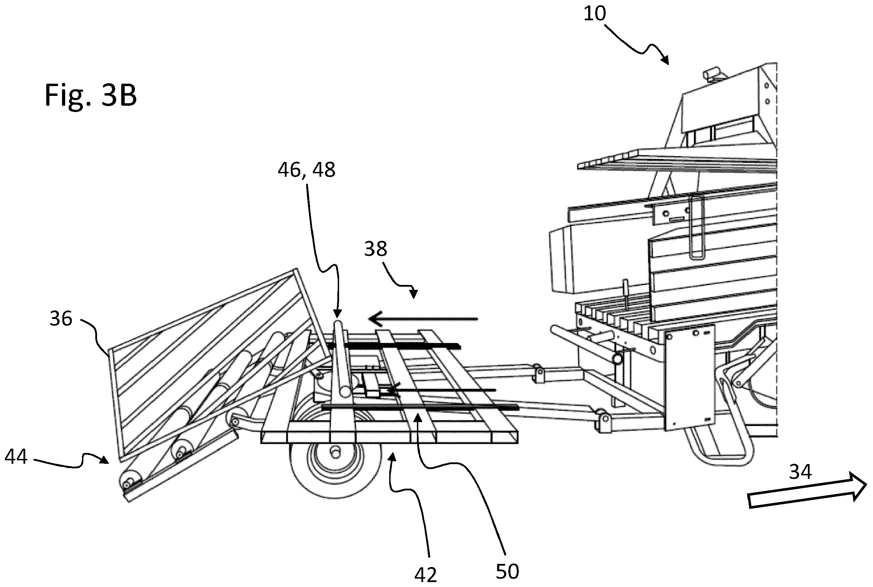

Die Schrägrampe 44 ist in der zweiten Endlage quer zur Fahrtrichtung 34 oder Längsrichtung der Halmgutpresse 10 ausgerichtet und befindet sich dabei heckseitig an der Förder- und/oder Ablageeinrichtung 38 bzw. weist dabei in eine Richtung entgegengesetzt zur Fahrtrichtung 34 der Halmgutpresse 10, so dass die gedrehten Ballen 36 rückseitig abgelegt werden können. Die solchermaßen gedrehten Ballen 36 werden mit ihren Längsseiten quer zur Fahrtrichtung 34 und entgegengesetzt zu dieser nach hinten über die Schrägrampe 44 abgelegt, wie dies die Fig. 3B in schematischer Weise andeutet.

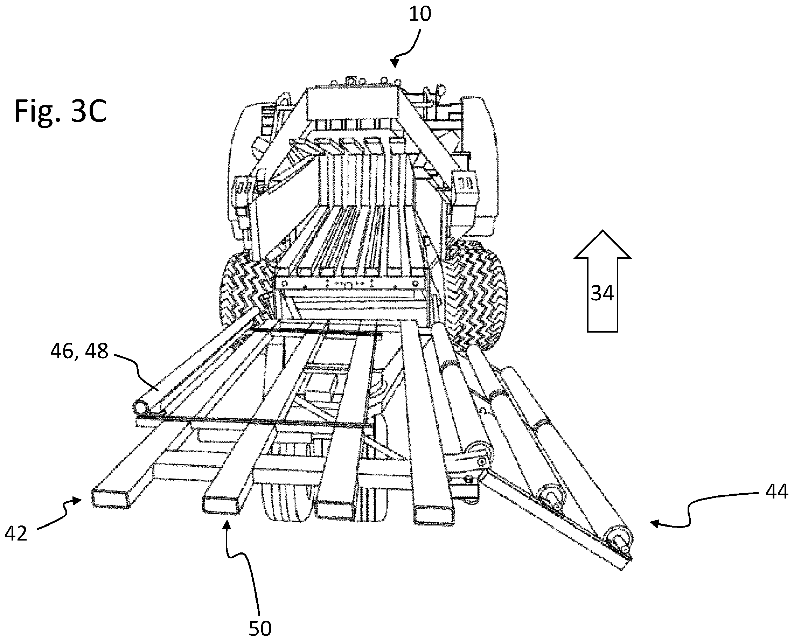

Nach Ablage eines Ballens 36 in der gezeigten Orientierung (Fig. 3B) kann der Auflagetisch 42 gemäß Fig. 3C wieder um 90° in die zuvor gezeigte Ausgangslage zurückgedreht werden, d.h. in die erste Endlage.

Wahlweise kann der Auflagetisch 42 mit einem motorisch betriebenen Aktor (nicht gezeigt) gekoppelt sein, der für eine gesteuerte Drehung und Rückdrehung und/oder für eine Drehbewegung zwischen den beiden Endlagen sorgen kann. Ein solcher Aktor kann bspw. ein motorischer Direktantrieb sein, der den Auflagetisch 42 in der gewünschten und in den Figuren 2A bis 3C gezeigten Weise drehen kann. Ebenso denkbar sind auch andere Aktoren, bspw. hydraulisch oder pneumatisch betätigbare Stellzylinder, die vorzugsweise unterhalb des Auflagetischs 42 angeordnet sind und diesen in der gewünschten Weise verdrehen oder verschwenken können.

Außerdem kann vorzugsweise auch die Schiebeeinrichtung 46 mit einem motorisch betriebenen Aktor gekoppelt sein, der für eine gesteuerte Bewegung und Rückbewegung des Schubbalkens 48 in lineare Richtung sorgen kann. Auch hierfür eignen sich bspw. hydraulisch oder pneumatisch betätigbare Stellzylinder, die für die erforderliche Linearbewegung sorgen können.

Folgendes sei als ergänzender Hinweis zu den vorstehenden Ausführungen gegeben. Wenn auch im Zusammenhang mit den in den Figuren gezeigten Ausführungsvarianten und deren vorstehenden Beschreibungen oftmals oder auch generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen von Teilen der Vorrichtungen, deren Einzelheiten oder anderer gezeichneter Elemente in irgendeiner Weise in seinem Verständnis beeinträchtigt wäre. Die Figuren ermöglichen es dem Fachmann als Leser vielmehr, anhand der konkreter erläuterten Umsetzungen des erfindungsgemäßen Verfahrens und des konkreter erläuterten Aufbaus der erfindungsgemäßen Halmgutpresse ein besseres Verständnis für den in den Ansprüchen sowie im allgemeinen Teil der Beschreibung zumindest hinsichtlich einiger Aspekte allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

10 Halmgutpresse, landwirtschaftliche Halmgutpresse, Packenpresse, Großpackenpresse
12 Zugdeichsel
14 Zwillingsachse
16 Stützrad, Stützräder
18 Gehäuse
20 Aufnahmeeinrichtung, Pick-Up
22 Längsmittelachse
24 Zinkenwalze, Zuführwalze
26 Stützrad (Aufnahmeeinrichtung)
28 Materialfluss (Halmgut, Erntegut), Materialflussrichtung
30 Schneidmodul
32 Schurre, Fördereinrichtung, Ablageeinrichtung, Förder- und/oder Ablageeinrichtung
34 Fahrtrichtung
36 Ballen, Großballen, Großpacken
38 Förder- und/oder Ablageeinrichtung
40 vertikale Achse
42 Auflagetisch, drehbarer Auflagetisch
44 Rampe, Schrägrampe
46 Schiebeeinrichtung
48 Schubbalken
50 Auflagefläche
52 Stützrad, Zwillings-Stützrad
54 Rollen, drehbare Rollen (der Schrägrampe)

## Patentansprüche

1. Landwirtschaftliche Halmgutpresse (10) zum Pressen von insbesondere quaderförmigen Ballen oder Großballen, mit einer Aufnahmeeinrichtung (20) zum Aufnehmen von Erntegut, mit einer Presseinrichtung zum Pressen des Erntegutes zu Ballen (36) definierter Größe und mit einer der Presseinrichtung nachgeordneten Förder- und/oder Ablageeinrichtung (32, 38) zum Auswerfen fertig gepresster und mit Garn umwickelter Ballen,
wobei die Förder- und/oder Ablageeinrichtung (38) einen um eine in etwa vertikale Achse (40) drehbaren Auflagetisch (42) aufweist,
**dadurch gekennzeichnet, dass** sich an den drehbaren Auflagetisch (42) der Förder- und/oder Ablageeinrichtung (38) seitlich eine Schrägrampe (44) zum kontrollierten Ablegen von Ballen (36) auf dem Boden anschließt,
und dass dem drehbaren Auflagetisch (42) eine Schiebeeinrichtung (46) zum Abschieben von auf dem Auflagetisch (42) befindlichen Ballen (36) oder Großballen in Richtung zur Schrägrampe (44) zugeordnet ist.

2. Landwirtschaftliche Halmgutpresse nach Anspruch 1, bei welcher die Schiebeeinrichtung (46) mindestens einen Schubbalken (48) umfasst, der in horizontaler Richtung und/oder parallel zur Auflagefläche (50) des Auflagetischs (42) über diesen bewegbar ist.

3. Landwirtschaftliche Halmgutpresse nach Anspruch 1 oder 2, bei welcher der Auflagetisch (42) drehbar auf einem Rahmenabschnitt gelagert ist, der mit der Halmgutpresse (10) gekoppelt und/oder am Heck der Halmgutpresse (10) angehängt ist, wobei der Auflagetisch (42) insbesondere zwischen zwei Endlage um etwa 90° um die vertikale Drehachse (40) bewegbar oder drehbar ist.

4. Landwirtschaftliche Halmgutpresse nach Anspruch 3, bei welcher der Rahmenabschnitt als Anhänger ausgebildet ist, der heckseitig an der Halmgutpresse (10) angehängt und lösbar mit dieser gekoppelt ist, wobei sich insbesondere unterhalb des Auflagetischs (42) mindestens ein am Boden abrollendes Stützrad (52) befindet.

5. Landwirtschaftliche Halmgutpresse nach Anspruch 3 oder 4, bei welcher der Rahmenabschnitt klappbar heckseitig an der Halmgutpresse (10) aufgehängt ist und ein bewegliches Teil dieser Halmgutpresse (10) bildet.

6. Landwirtschaftliche Halmgutpresse nach einem der Ansprüche 1 bis 5, bei welcher die an einer Längs- oder Schmalseite des drehbaren Auflagetischs (42) befindliche Schrägrampe (44) in ihrem Winkel zur Auflagefläche (50) des Auflagetischs (42) variabel einstellbar ist, und wobei die Schrägrampe (44) insbesondere mehrere Rollen (54) umfasst, welche gemeinsam eine Förderebene für die Ballen (36) bilden, welche auf dieser Förderebene abrollen können.

7. Landwirtschaftliche Halmgutpresse nach einem der Ansprüche 1 bis 6, bei welcher die Rollen des Auflagetischs (42) und/oder die Rollen (54) der Schrägrampe (44) jeweils mit Antrieben versehen sind, um Ballen (36) abschieben und auf dem Boden ablegen zu können.

8. Landwirtschaftliche Halmgutpresse nach einem der Ansprüche 1 bis 7, bei welcher der Auflagetisch (42) mit einem motorisch betriebenen Aktor gekoppelt ist, der für eine gesteuerte Drehung und Rückdrehung und/oder für eine Drehbewegung zwischen den beiden Endlagen sorgen kann.

9. Landwirtschaftliche Halmgutpresse nach einem der Ansprüche 1 bis 8, bei welcher die Schiebeeinrichtung (46) mit einem motorisch betriebenen Aktor gekoppelt ist, der für eine gesteuerte Bewegung und Rückbewegung des Schubbalkens (48) in lineare Richtung sorgen kann.

10. Verfahren zur Ablage von insbesondere quaderförmigen Ballen (36) oder Großballen, die mittels einer landwirtschaftlichen Halmgutpresse (10) aus vom Boden aufgenommenem Erntegut gepresst wurden, insbesondere mittels einer landwirtschaftlichen Halmgutpresse (10) gemäß einem der Ansprüche 1 bis 9, wobei die Ballen (36) nach dem Pressen über eine heckseitig an der Halmgutpresse (10) angeordnete Förder- und/oder Ablageeinrichtung (32, 38) ausgegeben, dort um eine in etwa vertikale Achse (40) gedreht und mittels einer Schiebeeinrichtung (46) zu einer Schrägrampe (44) überschoben und kontrolliert auf dem Boden abgelegt werden.

11. Verfahren nach Anspruch 10, bei dem die Ballen (36) um etwa 90° um eine in etwa vertikale Achse (40) gedreht und mit ihren Längsseiten quer zur Fahrtrichtung (34) auf dem Boden abgelegt werden.

12. Verfahren nach Anspruch 10 oder 11, bei dem die Ballen (36) über die rückseitig an der Halmgutpresse (10) angeordnete Schrägrampe (44) in einer Fahrspur der Halmgutpresse (10) abgelegt werden.

13. Verfahren nach einem der Ansprüche 10 bis 12, bei dem der Auflagetisch (42) der Halmgutpresse (10) jeweils dann um etwa 90° gedreht wird, wenn sich ein Ballen (36) auf diesem befindet.

14. Verfahren nach Anspruch 13, bei dem im Anschluss an eine Drehbewegung des Auflagetischs (42) mit darauf befindlichem Ballen (36) der Schubbalken (48) aktiviert und der Ballen (36) nach hinten über die Schrägrampe (44) abgeschoben und auf dem Boden abgelegt wird.

15. Verfahren nach Anspruch 14, bei dem im Anschluss an ein Abschieben eines Ballens (36) vom Auflagetisch (42) mittels des Schubbalkens (48) der Auflagetisch (42) wieder zurückgedreht wird, um einen weiteren Ballen (36) aufnehmen zu können, der aus der Halmgutpresse (10) herausgefördert wird.

## Claims

1. An agricultural stalk press (10) for pressing bales or big bales, in particular, cuboid-shaped bales or big bales, the stalk press (10) having a receiving device (20) for picking up harvested material, a pressing device for pressing the harvested material into bales (36) of a defined size, and, arranged downstream of the pressing device, a conveying device and/or depositing device (32, 38) for ejecting finished pressed bales bound with twine,
wherein the conveying device and/or depositing device (38) has a support table (42) that is rotatable about an approximately vertical axis (40),
**characterised in that** an inclined ramp (44) for the controlled depositing of bales (36) on the ground laterally adjoins the rotatable support table (42) of the conveying device and/or depositing device (38),
and **in that** the rotatable support table (42) is assigned a pushing device (46) for displacing bales (36) or big bales, which are situated on the support table (42), toward the inclined ramp (44).

2. The agricultural stalk press according to claim 1, in which the pushing device (46) comprises at least one pusher bar (48), which is movable across the support table (42) in horizontal direction and/or parallel to the support surface (50) of the support table (42).

3. The agricultural stalk press according to claim 1 or 2, in which the support table (42) is rotatably mounted on a frame section, which is coupled with the stalk press (10) and/or hitched to the rear end of the stalk press (10), wherein the support table (42) is movable or rotatable by approximately 90° about the vertical axis of rotation (40) between two stop positions, in particular.

4. The agricultural stalk press according to claim 3, in which the frame section is constructed as a trailer, which is hitched to the rear end of the stalk press (10) and detachably coupled therewith, wherein at least one support wheel (52) rolling off on the ground is situated below the support table (42), in particular.

5. The agricultural stalk press according to claim 3 or 4, in which the frame section is suspended in a foldable manner from the rear end of the stalk press (10) and forms a movable part of the stalk press (10).

6. The agricultural stalk press according to one of the claims 1 to 5, in which the inclined ramp (44) situated at a longitudinal side or at a narrow side of the rotatable support table (42) is variably adjustable in its angle to the support surface (50) of the support table (42), and wherein the inclined ramp (44) comprises a plurality of rollers (54), in particular, which together form a conveying surface for the bales (36), which can roll off on this conveying surface.

7. The agricultural stalk press according to one of the claims 1 to 6, in which the rollers of the support table (42) and/or the rollers (54) of the inclined ramp (44) are each provided with drives in order to be able to displace bales (36) and deposit them on the ground.

8. The agricultural stalk press according to one of the claims 1 to 7, in which the support table (42) is coupled with a motor-operated actuator, which can provide for a controlled rotation and return rotation and/or for a rotary movement between the two end positions.

9. The agricultural stalk press according to one of the claims 1 to 8, in which the pushing device (46) is coupled with a motor-operated actuator, which can provide for a controlled movement and return movement of the pusher bar (48) in a linear direction.

10. A method for depositing bales (36) or big bales, in particular, cuboid-shaped bales (36) or big bales, which have been pressed by means of an agricultural stalk press (10) from harvested material picked up from the ground, in particular, by means of an agricultural stalk press (10) according to one of the claims 1 to 9, wherein the bales (36), after having been pressed, are ejected via a conveying device and/or depositing device (32, 38) arranged at the rear end of the stalk press (10), are rotated about an approximately vertical axis (40) there, and are transferred by means of a pushing device (46) to an inclined ramp (44) and deposited on the ground in a controlled manner.

11. The method according to claim 10, in which the bales (36) are rotated by approximately 90° about an approximately vertical axis (40) and are deposited on the ground with their longitudinal sides transverse to the driving direction (34).

12. The method according to claim 10 or 11, in which the bales (36) are deposited in a driving lane of the stalk press (10) via the inclined ramp (44) arranged at the back of the stalk press (10).

13. The method according to one of the claims 10 to 12, in which the support table (42) of the stalk press (10) is rotated by approximately 90° in each instance when a bale (36) is situated thereon.

14. The method according to claim 13, in which, subsequent to a rotary movement of the support table (42) with a bale (36) situated thereon, the pusher bar (48) is activated and the bale (36) is displaced toward the back via the inclined ramp (44) and is deposited on the ground.

15. The method according to claim 14, in which, subsequent to a displacement of a bale (36) from the support table (42) by means of the pusher bar (48), the support table (42) is moved back in order to be able to receive another bale (36) that is being conveyed out of the stalk press (10).

## Revendications

1. Presse agricole de produits en tige (10) destiné à presser des balles ou de grosses balles, en particulier en forme de parallélépipède rectangle, avec un dispositif de réception (20) destiné à recevoir de la récolte, avec un dispositif de pressage pour presser la récolte en balles (36) de taille définie et avec un dispositif de transport et/ou de dépôt (32, 38) qui est disposé en aval du dispositif de pressage et destiné à éjecter des balles finies et enveloppées de ficelle,
dans laquelle le dispositif de transport et/ou de dépôt (38) présente une table de support (42) apte à être tournée autour d'un axe (40) à peu près vertical,
**caractérisée par le fait que** la table de support (42) rotative du dispositif de transport et/ou de dépose (38) est suivie latéralement d'une rampe inclinée (44) pour déposer de manière contrôlée des balles (36) sur le sol,
et qu'à la table de support (42) rotative est associé un dispositif à pousser (46) destiné à évacuer en poussant des balles (36) ou grosses balles situées sur la table de support (42) en direction de la rampe inclinée (44).

2. Presse agricole de produits en tige (10), selon la revendication 1, dans laquelle le dispositif à pousser (46) comprend au moins une barre de poussée (48) qui peut être déplacée sur la table de support (42) dans la direction horizontale et/ou parallèlement à la surface de support (50) de celle-ci.

3. Presse agricole de produits en tige (10) selon la revendication 1 ou 2, dans laquelle la table de support (42) est logée à rotation sur une section de châssis qui est couplée à la presse de produits en tige (10) et/ou attachée à l'arrière de la presse de produits en tige (10), dans laquelle la table de support (42) peut être déplacée ou tournée de 90° à peu près autour de l'axe vertical de rotation (40) en particulier entre deux positions extrêmes.

4. Presse agricole de produits en tige (10) selon la revendication 3, dans laquelle la section de châssis est conçue en tant que remorque qui est attachée côté arrière sur la presse de produits en tige (10) et est couplée de manière amovible à celle-ci, dans laquelle au moins une roue d'appui (52) qui roule sur le sol est située en particulier au-dessous de la table de support (42).

5. Presse agricole de produits en tige (10) selon la revendication 3 ou 4, dans laquelle la section de châssis est suspendue de manière pliable sur la face arrière de la presse de produits en tige (10) et forme une partie mobile de cette presse de produits en tige (10).

6. Presse agricole de produits en tige (10) selon l'une quelconque des revendications 1 à 5, dans laquelle la rampe inclinée (44) située sur un grand ou petit côté de la table de support (42) rotative est réglable de manière variable dans son angle par rapport à la surface de support (50) de la table de support (42), et dans laquelle la rampe inclinée (44) comprend en particulier une pluralité de galets (54) qui forment ensemble un plan de convoyage pour les balles (36) qui peuvent rouler sur ce plan de convoyage.

7. Presse agricole de produits en tige (10) selon l'une quelconque des revendications 1 à 6, dans laquelle les galets de la table de support (42) et/ou les galets (54) de la rampe inclinée (44) sont munis chacun de dispositifs d'entraînement pour pouvoir évacuer en poussant des balles (36) et pour pouvoir déposer celles-ci sur le sol.

8. Presse agricole de produits en tige (10) selon l'une quelconque des revendications 1 à 7, dans laquelle la table de support (42) est couplée à un actionneur commandé par moteur qui peut assurer une rotation et une rotation inverse commandées et/ou un mouvement rotatif entre les deux positions extrêmes.

9. Presse agricole de produits en tige (10) selon l'une quelconque des revendications 1 à 8, dans laquelle le dispositif à pousser (46) est couplé à un actionneur commandé par moteur qui peut assurer un mouvement et un mouvement de retour commandés de la barre de poussée (48) en direction linéaire.

10. Procédé de dépôt de balles (36) ou de grosses balles, en particulier en forme de parallélépipède rectangle, qui ont été pressées à partir de récolte ramassée au sol au moyen d'une presse agricole de produit en tige (10), en particulier au moyen d'une presse agricole de produits en tige (10) selon l'une quelconque des revendications 1 à 9, dans lequel les balles (36), après qu'elles ont été pressées, sont évacuées par un dispositif de transport et/ou de dépôt (32, 38) disposé côté arrière sur la presse de produits en tige (10), y sont tournées autour d'un axe (40) à peu près vertical et sont transférées par poussée, au moyen d'un dispositif à pousser (46), à une rampe inclinée (44) et sont déposées de manière contrôlées sur le sol.

11. Procédé selon la revendication 10, dans lequel les balles (36) sont tournées de 90° à peu près autour d'un axe (40) à peu près vertical et sont déposées sur le sol, leurs grands côtés étant transversaux à la direction de marche (34).

12. Procédé selon la revendication 10 ou 11, dans lequel les balles (36) sont déposées via la rampe inclinée (44) disposée côté arrière sur la presse de produits en tige (10), dans une voie de circulation de la presse de produits en tige (10).

13. Procédé selon l'une quelconque des revendications 10 à 12, dans lequel la table de support (42) de la presse de produits en tige (10) est tournée de 90° à peu près à chaque fois qu'une balle (36) se trouve sur celle-ci.

14. Procédé selon la revendication 13, dans lequel, suite à un mouvement de rotation de la table de support (42) avec une balle (36) se trouvant sur celle-ci, la barre de poussée (48) est activée et la balle (36) est évacuée par poussée vers l'arrière via la rampe inclinée (44) et est déposée sur le sol.

15. Procédé selon la revendication 14, dans lequel, après qu'une balle (36) a été évacuée par poussée de la table de support (42) au moyen de la barre de poussée (48), la table de support (42) est à nouveau tournée en arrière afin de pouvoir recevoir une autre balle (36) qui est transportée hors de la presse de produits en tige (10).
